# EUROPEAN PATENT SPECIFICATION

(11) **EP 2 235 775 B1**
(45) Date of publication and mention of the grant of the patent: **16.07.2014**
(21) Application number: 07873694.9
(22) Date of filing: 26.12.2007
(51) Int. Cl.: H01M 8/02, H01M 8/10

(54) **FUEL CELL AND BIPOLAR PLATE FOR LIMITING LEAKAGE**
BRENNSTOFFZELLE UND BIPOLARPLATTE ZUR LECKBEGRENZUNG
PILE À COMBUSTIBLE ET PLAQUE BIPOLAIRE POUR LIMITER LES FUITES

(43) Date of publication of application: 06.10.2010
(73) Proprietor: United Technologies Corporation, Hartford, CT 06101 (US)
(72) Inventor: NIEZELSKI, David, A., Manchester CT 06042 (US); WHITON, John, H., South Windsor CT 06074 (US); PHILLIPS, Richard, R., West Hartford CT 06107 (US)
(74) Representative: Klunker . Schmitt-Nilson . Hirsch
(86) International application number: PCT/US2007/088796
(87) International publication number: WO 2009/082406

(56) References cited:
- DE-B3-102005 037 370
- US-A1- 2005 244 703
- US-A1- 2007 154 744
- US-B1- 6 187 466

## Description

### BACKGROUND OF THE DISCLOSURE

This disclosure relates to fuel cells. More particularly, this disclosure relates to limiting leakage of reactant gases from the fuel cell.

Fuel cells are widely known and used for generating electricity for a variety of uses. Typically, a fuel cell unit includes an anode, a cathode, and an ion-conducting polymer exchange membrane (PEM) between the anode and the cathode. The anode and cathode are between bipolar plates (also referred to as separator plates) that include flow fields for delivering reactant gases to the PEM for generating electricity in a known electrochemical reaction: Typically, one or more of the bipolar plates also include a coolant flow field on an opposing side that circulates water to maintain the fuel cell unit at a desirable operating temperature.

One problem associated with fuel cells relates to containing the reactants within the fuel cell to limit or prevent overboard leakage. For example, in a fuel cell that utilizes porous bipolar plates, sometimes referred to as water transport plates, the reactant gases are typically supplied at desirable gas pressures relative to a pressure of the coolant water. However, if the pressures are not maintained within a desirable range, the reactant gases may overcome the coolant water pressure and escape from the flow fields. Additionally, for porous or solid bipolar plates, the reactant gases may also diffuse through the materials used to make the fuel cell or may escape through leak paths formed between the bipolar plates and the PEM. Thus, in systems where leakage avoidance is important, it is generally desirable to provide a containment strategy to prevent or limit overboard leakage of the reactant gases.

One example fuel cell for containing leakage of reactant gases is disclosed in United States Patent No. 6,187,466 issued to Schroll et al., which includes a wet edge seal to limit leakage. The wet edge seal is formed near the sides of porous water transport plates. Capillary forces associated with the size of the pores cause water to impregnate the pores. The impregnated pores provide a wet seal that limits reactant gas leakage into the water coolant system and overboard leakage of the reactant gases.

DE 10 2005 037 370 B3 discloses a fuel cell comprising a plurality of bipolar plates, each of them with a sealing channel surrounding the reactant gas flow fields at both sides of each bipolar plate, the channel being suitable for conveying a fluid. In each bipolar plate the sealing channel is located between a gasket and the reactant flow field, and in order to avoid leakage of reactant gas from the fuel cell a flow of a seal fluid is established through the channel.

US 2005/244703 A1 discloses a fuel cell comprising a plurality of porous bipolar plates, each of them with a sealing channel surrounding reactant gas or coolant flow fields and reactant gas or coolant manifolds. The sealing channel is also suitable for conveying a fluid.

US 2007/154744 A1 discloses fuel cells comprising reactant gas flow field plates having reactant gas flow channels and further comprising a coolant flow path including at least one coolant passageway disposed in or near a surface of a flow field plate, said coolant passageways being made gas tolerant in order to prevent gas bubbles from blocking coolant flow.

The wet seal may have several problems that would lead to leaking. For example, the small size of the pores and the relatively low flow of water through the pores may not be adequate to contain all types of leaks. A relatively large leak or a constant leak may overcome the containment capacity of the wet seal. Furthermore, some porous water transport plates are known to be vulnerable to "dry out" because of a difficulty in transporting water through the pores to maintain all portions of the plate in a wet state. If dry-out occurs at the wet seal, the dry portions may provide a leakage path through the wet seal.

Accordingly, there is a need for a fuel cell and bipolar plate for limiting leakage of reactant gases from the fuel cell.

### SUMMARY OF THE DISCLOSURE

Subject-matter of the present invention is a device for use in a fuel cell, a fuel cell, and a method of controlling overboard leakage of a reactant gas from a fuel cell as claimed in the independent claims. Embodiments of the invention are defined in the respective dependent claims.

### BRIEF DESCRIPTION OF THE DRAWINGS

The various features and advantages of this disclosure will become apparent to those skilled in the art from the following detailed description of the currently preferred embodiment. The drawings that accompany the detailed description can be briefly described as follows.
Figure 1 illustrates an example fuel cell having at least one unitized cell assembly.
Figure 2 illustrates a bipolar plate of the fuel cell.
Figure 3 illustrates one side of another bipolar plate of the fuel cell.
Figure 4 illustrates the other side of the bipolar plate of Figure 3.
Figure 5 illustrates a selected portion of a unitized cell assembly of the fuel cell.

### DETAILED DESCRIPTION OF THE PREFERRED EMBODIMENT

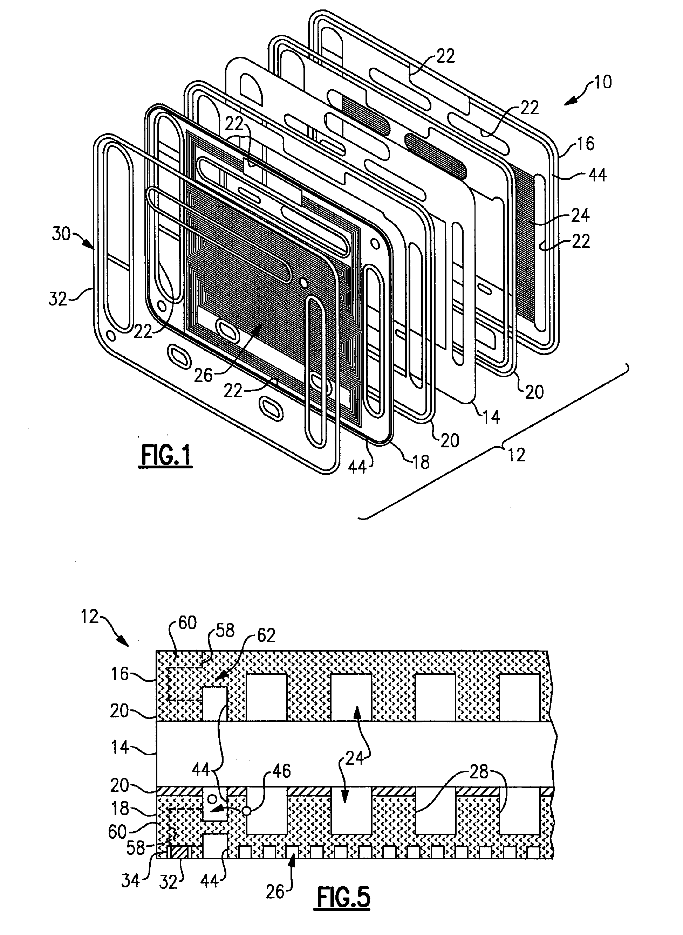

Figure 1 schematically illustrates an exploded view of selected portions of an example fuel cell 10 for generating electricity. In the illustrated example, the fuel cell 10 includes at least one unitized cell 12. For example, a plurality of the unitized cells 12 may be used to form a fuel cell stack, depending on the desired amount of electricity to be generated. As is known, the unitized cell 12, or alternatively a fuel cell stack having multiple unitized cells 12, may be secured between pressure plates in a known manner to form the fuel cell 10. Furthermore, the fuel cell 10 may include various additional components that are not illustrated, such as components associated with the supply of reactant gases, coolant water, etc. Given this description, one of ordinary skill in the art would recognize that the disclosed examples are applicable to a variety of different fuel cell configurations.

In the disclosed example, the unitized cell 12 includes a membrane electrode assembly (MEA) 14 located between a first bipolar plate 16 and a second bipolar plate 18, which may be referred to as anode and cathode bipolar plates depending on the location relative to the MEA 14 electrodes. The bipolar plates 16 and 18 may be porous, as in the illustrated example, or solid, for example carbon composite or metallic. For example, the MEA 14 includes a cathode catalyst electrode, an anode catalyst electrode, and a polymer exchange membrane, but is not limited to any specific configuration.

In the illustrated example, the first bipolar plate 16, the second bipolar plate 18, and the MEA 14 are secured together using, for example, bonding films 20. For example, the bonding film 20 is a relatively thin layer of low density polyethylene.

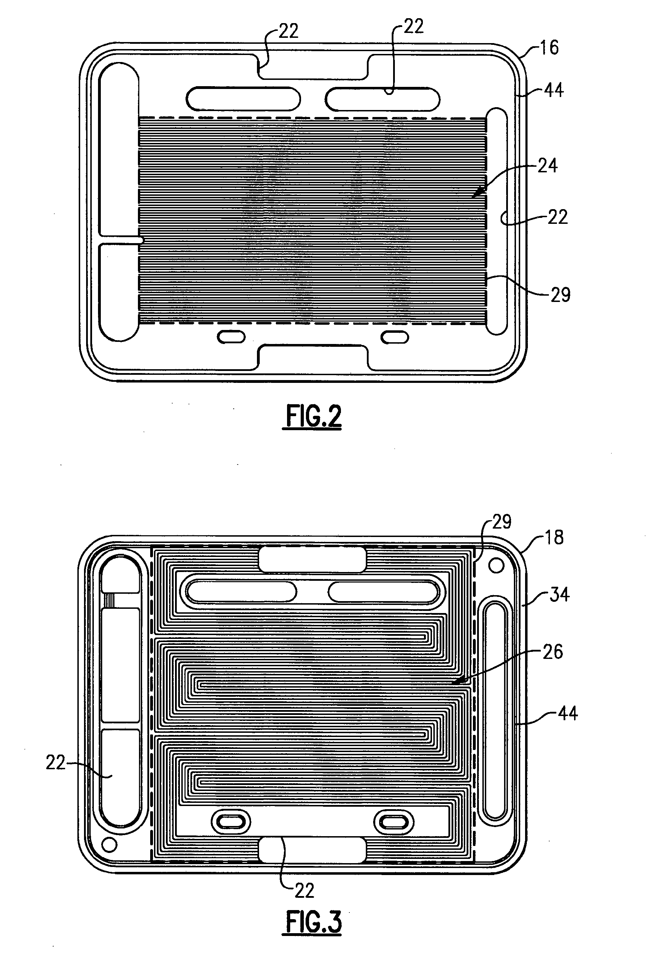

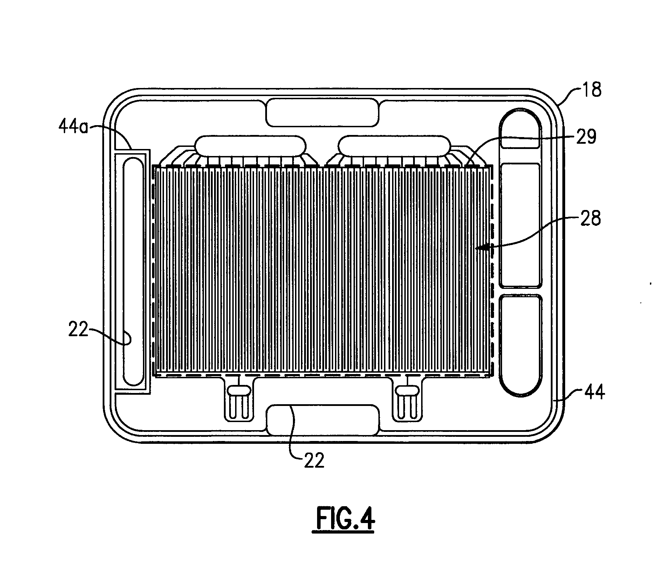

The first bipolar plate 16 is also shown in Figure 2. The second bipolar plate 18 is also shown in Figure 3, and the other side of the second bipolar plate 18 that is not visible in Figures 1 and 3 is shown in Figure 4. The reverse side of the first bipolar plate 16 may also be configured similarly to that shown in Fig. 4. The bipolar plates 16 and 18 each include a variety of different manifolds 22 and flow fields 24. Referring also to Figure 5, the flow field 24 of the first bipolar plate 16 in the disclosed example supplies a first reactant gas (e.g., hydrogen) to the MEA 14. The flow field 24 of the second bipolar plate 18 in the disclosed example includes two different types of flow fields 24. A first flow field 26 on one side circulates coolant water and another flow field 28 on the other side supplies a second reactant gas (e.g., oxygen) to the MEA 14. The manifolds 22 supply either coolant water or reactant gases to the flow fields 24, 26, 28 in a known manner.

Each of the flow fields 24, 26, and 28 defines an associated region 29 (represented with dashed lines) that encompasses the respective flow field 24, 26, or 28. Thus, each region 29 defines areas that are inside of the region 29 (e.g., the flow fields 24, 26, or 28) and areas that are outside of the region 29, such as the manifolds 22.

In the illustrated example, the unitized cell 12 utilizes a gasket system 30 to seal the unitized cell 12 and prevent intermixing of the reactant gases and coolant water. For example, the gasket system 30 includes one or more gaskets 32 located within gasket channels 34 that extend about the perimeter of the second bipolar plate 18 and about the various manifolds 22. In other examples, additional gaskets may be used depending on the particular configuration of the fuel cell 10.

Each of the example bipolar plates 16 and 18 includes a channel 44 that is located outside of the region 29 of the respective bipolar plate 16 or 18. In the disclosed example, the channels 44 completely circumscribe the regions 29 of the flow fields 24, 26, and 28, although in other examples the channels 44 may extend only partially about the flow fields 24, 26, 28.

The channels 44 circulate a seal fluid that limits leakage of the reactant gas from the fuel cell 10. In the illustrated example, the channels 44 are formed into the corresponding bipolar plates 16 and 18. For example, the channels 44 may be formed in a similar manner as channels of the flow fields 24, 26, and 28, such as by machining, molding, or other suitable method.

In the illustrated example, the channel 44 of the first bipolar plate 16 extends about the periphery and is fluidly connected with at least one of the manifolds 22 that supplies coolant water. The second bipolar plate 18 includes two of the channels 44, one on each side. The channels 44 of the second bipolar plate 18 are also fluidly connected with one of the manifolds 22 that supplies coolant water. Optionally, any of the channels 44 may also include one or more branch channels, such as branch channel 44a (Figure 4), that extend from the channel 44 adjacent to one or more of the manifolds 22. In the illustrated example, the branch channel 44a circumscribes one of the manifolds 22, such as a fuel reactant gas exit manifold, to limit any leakage therefrom as will be described more fully below. Additionally, the first bipolar plate 16 may also include a second one of the channels 44, similar to the second bipolar plate 18.

In operation, the coolant water from the manifolds 22 flows through the second flow field 26 of the second bipolar plate 18 to provide cooling. If porous types of the bipolar plates 16 and 18 are used, the coolant water also maintains the bipolar plates 16 and 18 in a wet state by infiltrating the pores.

The coolant water also flows through the channels 44 and serves as a seal fluid. Any reactant gas that leaks from the flow fields 24 may be captured and carried away by the coolant water flowing through the channels 44 to thereby prevent or limit overboard leakage from the fuel cell 10, as will be discussed more fully below.

In the disclosed example, the channels 44 of each bipolar plate 16 and 18 are located between the gasket channels 34 and the each of the regions 29. Thus, the coolant water flowing within the channels 44 provides a first stage of leak prevention, and the gaskets 32 provide a second stage of leak protection if any reactant gas does penetrate through the coolant water and channels 44. Alternatively, the gaskets 32 may be located between the channels 44 and the regions 29.

In one example, the first bipolar plate 16, the second bipolar plate 18, or both are porous such that the coolant water infiltrates the pores in a known manner. However, under certain circumstances, the pores may dry out and thereby provide a leakage path for the reactant gases. For example, a bubble 46 may diffuse through a dry portion of the second bipolar plate 18, as illustrated in Figure 5. As the bubble 46 diffuses toward the edge of the unitized cell 12, it encounters one of the channels 44. The coolant water flowing through the channel 44 captures the bubble 46 and thereby prevents it from leaking overboard from the fuel cell 10. Likewise, if a leakage path is formed interfacially between the first bipolar plate 16 or the second bipolar plate 18 and the bonding films 20, any leaked reactant gas may be captured by the coolant water flowing through the channels 44 to prevent the reactant gas from leaking overboard.

Additionally, the pressure of the coolant water for the channels 44 may be controlled relative to a pressure of the reactant gases to facilitate capture of leaked reactant gas. For example, the reactant gas pressure may be higher than the coolant water pressure such that a pressure differential therebetween draws any leaked reactant gas into the channels 44. Depending on the magnitude of the pressure differential, there may be a zone of influence that extends several channel widths from the channel 44 to draw in any leaked reactant gas from the regions 29 or manifolds 22.

In the disclosed example, a mass flow of the coolant water through the channels 44 may be controlled to provide a desired amount of protection against leaking. For example, a relatively greater mass flow provides the ability to carry away a corresponding greater amount of leaking reactant gas. Thus, a desired mass flow of the coolant water can be established based on an expected amount of reactant gas leakage to provide a desired degree of overboard leakage protection. In one example, the flow of the coolant water through the channels 44 is controlled in a known manner, such as by using a pump that is associated with circulating the coolant water.

Optionally, as shown in Figure 5, the edges of the first bipolar plate 16, the second bipolar plate 18, or both may include an edge seal 58 to further limit leakage. In this example, the edge seals 58 include a solid sealant material 60 impregnated within the pores of the first bipolar plate 16 or the second bipolar plate 18. For example, the solid sealant material 60 includes low-density polyethylene or other type of sealant material.

In the disclosed example, the edge seal 58 forms a U-shape that encapsulates a volume of pores that do not contain the solid sealant. In other examples, the edge seals 58 may have different configurations. The encapsulated volume of pores and the pores within a transition section 62 near the opening of the U-shape may be vulnerable to dry out because the solid sealant material 60 limits accessibility of the coolant water. Additionally, hydrophobicity of the solid sealant material 60 may impede coolant water transport into the pores near the edge seal 58. However, in the illustrated example, the channels 44 are located immediately adjacent the edge seals 58 and thereby provide a source of coolant water to maintain the pores near the edge seal 58 in a wet state. Thus, the channels 44 also provide the benefit of limiting dry out of the bipolar plates 16 and 18.

Additionally, the channels 44 may be located near one of the manifolds 22 that functions as an inlet for oxygen reactant gas. In this regard, the coolant water from the channel 44 may also function to hydrate the reactant gas to a desired degree as the reactant gas enters the fuel cell 10.

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art. The scope of legal protection given to this disclosure can only be determined by studying the following claims.

## Claims

1. A device for use in a fuel cell (10) comprising:
a bipolar plate (16, 18) including
- a region (29) encompassing a flow field (24, 26, 28);
- at least one channel (44) that is located outside of the region (29), and is configured to convey a coolant as a seal fluid to limit leakage of a reactant gas from the flow field (24, 28); and
- a coolant manifold (22) for supplying coolant to the bipolar plate (16, 18), the coolant manifold (22) being fluidly connected with the channel (44).

2. The device as recited in claim 1, wherein the at least one channel (44) comprises a first channel on a first side of the bipolar plate (16, 18) and a second channel on a second, opposite side of the bipolar plate (16, 18).

3. The device as recited in claim 1, wherein the at least one channel (44) circumscribes the region (29).

4. The device as recited in claim 1, wherein the at least one channel (44) comprises a rectangular cross-section.

5. The device as recited in claim 1, further including a gasket (32) extending around the region (29).

6. The device as recited in claim 5, wherein the at least one channel (44) is located between the gasket (32) and the region (29).

7. The device as recited in claim 1, wherein the bipolar plate (16, 18) comprises an edge section (58) having pores that are at least partially filled with a solid sealant (60).

8. The device as recited in claim 7, wherein the bipolar plate includes a section (62) between the edge section (58) and a remaining portion of the bipolar plate (16, 18), wherein the at least one channel (44) is immediately adjacent the section (62).

9. The device as recited in claim 1, wherein the at least one channel (44) circumscribes the manifold (22).

10. A fuel cell (10) comprising:
at least one electrode assembly (14);
a plurality of bipolar plates (16, 18) as defined in any one of claims 1
to 9, the bipolar plates associated with the at least one electrode assembly (14).

11. The fuel cell as recited in claim 10, wherein each coolant manifold (22) includes a first manifold near one end of the corresponding bipolar plate (16, 18) and a second manifold section near another end of the corresponding bipolar plate (16, 18).

12. A method of controlling overboard leakage of a reactant gas from a fuel cell (10) as claimed in claim 10 or 11, comprising:
establishing a flow of coolant as a seal fluid from a coolant manifold (22) of the plurality of bipolar plates (16, 18) that supplies a coolant;
establishing a flow of coolant as a seal fluid through the channel (44); and capturing a reactant gas that has leaked from one of the regions (29) with the seal fluid to thereby limit overboard leakage of the reactant gas from the flow field (24, 28).

13. The method as recited in claim 12, further including establishing a desired flow of the coolant as the seal fluid based upon an expected reactant gas leak rate.

14. The method as recited in claim 12, comprising establishing a first pressure of the coolant as the seal fluid and a second pressure of the reactant gas that is greater than the first pressure to draw the reactant gas that has leaked from the region (29) into the seal fluid.

## Patentansprüche

1. Vorrichtung zur Verwendung in einer Brennstoffzelle (10), aufweisend:
eine bipolare Platte (16, 18), die besitzt
- einen Bereich (29), der ein Strömungsfeld (24, 26, 28) umfasst;
- mindestens einen Kanal (44), der sich außerhalb des Bereichs (29) befindet und dazu ausgelegt ist, ein Kühlmittel als ein Dichtungsfluid zu transportieren, um ein Lecken eines Reaktionsmittelgases aus dem Strömungsfeld (24, 28) zu begrenzen; und
- eine Kühlmittel-Sammel/Verteilerleitung (22) zum Zuführen von Kühlmittel zu der bipolaren Platte (16, 18), wobei die Kühlmittel-Sammel/Verteilerleitung (22) in Fluidverbindung mit dem Kanal (44) steht.

2. Vorrichtung wie in Anspruch 1 angegeben, wobei der mindestens eine Kanal (44) einen ersten Kanal an einer ersten Seite der bipolaren Platte (16, 18), und einen zweiten Kanal an einer zweiten, entgegengesetzten Seite der bipolaren Platte (16, 18) aufweist.

3. Vorrichtung wie in Anspruch 1 angegeben, wobei der mindestens eine Kanal (44) den Bereich (29) umgrenzt.

4. Vorrichtung wie in Anspruch 1 angegeben, wobei der mindestens eine Kanal (44) einen rechteckigen Querschnitt aufweist.

5. Vorrichtung wie in Anspruch 1 angegeben, die außerdem eine Dichtung (32), die sich um den Bereich (29) herum erstreckt, besitzt.

6. Vorrichtung wie in Anspruch 5 angegeben, wobei sich der mindestens eine Kanal (44) zwischen der Dichtung (32) und dem Bereich (29) befindet.

7. Vorrichtung wie in Anspruch 1 angegeben, wobei die bipolare Platte (16, 18) eine Randzone (58) mit Poren, die mindestens teilweise mit einem festen Dichtmittel (60) gefüllt sind, aufweist.

8. Vorrichtung wie in Anspruch 7 angegeben, wobei die bipolare Platte eine Zone (62) zwischen der Randzone (58) und einem verbleibenden Bereich der bipolaren Platte (16, 18) besitzt, wobei der mindestens eine Kanal (44) der Zone (62) unmittelbar benachbart ist.

9. Vorrichtung wie in Anspruch 1 angegeben, wobei der mindestens eine Kanal (44) die Sammel/Verteilerleitung (22) umgrenzt.

10. Brennstoffzelle (10) aufweisend:
mindestens eine Elektrodenanordnung (14);
eine Mehrzahl von bipolaren Platten (16, 18) wie in einem der Ansprüche 1 bis 9 definiert, wobei die bipolaren Platten mit der mindestens einen Elektrodenanordnung (14) verbunden sind.

11. Brennstoffzelle wie in Anspruch 10 angegeben, wobei jede Kühlmittel-Sammel/Verteilerleitung (22) eine erste Sammel/Verteilerleitung nahe einem Ende der zugeordneten bipolaren Platte (16, 18) und eine zweite Sammel/Verteilerzone nahe einem anderen Ende der zugeordneten bipolaren Platte (16, 18) besitzt.

12. Verfahren zum Kontrollieren des Über-Bord-Leckens eines Reaktionsmittelgases aus einer Brennstoffzelle (10), wie sie in Anspruch 10 oder 11 beansprucht ist, aufweisend:
Herstellen einer Strömung eines Kühlmittels als ein Dichtungsfluid von einer Kühlmittel-Sammel/Verteilerleitung (22) der Mehrzahl von bipolaren Platten (16, 18), die ein Kühlmittel zuführt;
Herstellen einer Strömung eines Kühlmittels als ein Dichtungsfluid durch den Kanal (44); und Abfangen eines Reaktionsmittelgases, das aus einem der Bereiche (29) herausgeleckt ist, mit dem Dichtungsfluid, um dadurch ein Über-Bord-Lecken des Reaktionsmittelgases aus dem Strömungsfeld (24, 28) zu begrenzen.

13. Verfahren wie in Anspruch 12 angegeben, außerdem umfassend ein Herstellen einer gewünschten Strömung des Kühlmittels als das Dichtungsfluid auf der Basis einer erwarteten Reaktionsmittelgas-Leckrate.

14. Verfahren wie in Anspruch 12 angegeben, aufweisend ein Herstellen eines ersten Drucks des Kühlmittels als das Dichtungsfluid und eines zweiten Drucks des Reaktionsmittelgases, der größer ist als der erste Druck, um das Reaktionsmittelgas, das aus dem Bereich (29) herausgeleckt ist, in das Dichtungsfluid hinein zu ziehen.

## Revendications

1. Dispositif pour l'utilisation dans une pile à combustible (10), comprenant :
une plaque bipolaire (16, 18) comprenant
- une région (29) englobant un champ d'écoulement (24, 26, 28) ;
- au moins un canal (44) qui est situé à l'extérieur de la région (29), et est configuré pour transporter un liquide de refroidissement en tant que fluide d'étanchéité pour limiter les fuites d'un gaz réactif à partir du champ d'écoulement (24, 28) ; et
- un collecteur de liquide de refroidissement (22) pour fournir le liquide de refroidissement à la plaque bipolaire (16, 18), le collecteur de liquide de refroidissement (22) étant raccordé de façon fluidique au canal (44).

2. Dispositif selon la revendication 1, dans lequel l'au moins un canal (44) comprend un premier canal sur un premier côté de la plaque bipolaire (16, 18) et un second canal sur un second côté opposé de la plaque bipolaire (16, 18).

3. Dispositif selon la revendication 1, dans lequel l'au moins un canal (44) encercle la région (29).

4. Dispositif selon la revendication 1, dans lequel l'au moins un canal (44) comprend une section transversale rectangulaire.

5. Dispositif selon la revendication 1, comprenant en outre un joint (32) s'étendant autour de la région (29).

6. Dispositif selon la revendication 5, dans lequel l'au moins un canal (44) est situé entre le joint (32) et la région (29).

7. Dispositif selon la revendication 1, dans lequel la plaque bipolaire (16, 18) comprend une section de bord (58) possédant des pores qui sont au moins partiellement remplis avec un produit d'étanchéité solide (60).

8. Dispositif selon la revendication 7, dans lequel la plaque bipolaire comprend une section (62) entre la section de bord (58) et une partie restante de la plaque bipolaire (16, 18), dans lequel l'au moins un canal (44) est immédiatement adjacent à la section (62).

9. Dispositif selon la revendication 1, dans lequel l'au moins un canal (44) encercle le collecteur (22).

10. Pile à combustible (10), comprenant :
au moins un ensemble électrode (14) ;
une pluralité de plaques bipolaires (16, 18) selon l'une quelconque des revendications 1 à 9, les plaques bipolaires étant associées à l'au moins un ensemble électrode (14).

11. Pile à combustible selon la revendication 10, dans laquelle chaque collecteur de liquide de refroidissement (22) comprend un premier collecteur près d'une extrémité de la plaque bipolaire correspondante (16, 18) et une seconde section de collecteur près d'une autre extrémité de la plaque bipolaire correspondante (16, 18).

12. Procédé de contrôle de fuites vers l'extérieur d'un gaz réactif à partir d'une pile à combustible (10) selon la revendication 10 ou 11, comprenant :
l'établissement d'un écoulement de liquide de refroidissement en tant que fluide d'étanchéité à partir d'un collecteur de liquide de refroidissement (22) de la pluralité de plaques bipolaires (16, 18) qui fournit un liquide de refroidissement ;
l'établissement d'un écoulement de liquide de refroidissement en tant que fluide d'étanchéité à travers le canal (44) ; et
la capture d'un gaz réactif qui a fui d'une des régions (29) avec un fluide d'étanchéité pour ainsi limiter les fuites vers l'extérieur du gaz réactif à partir du champ d'écoulement (24, 28).

13. Procédé selon la revendication 12, comprenant en outre l'établissement d'un écoulement souhaité du liquide de refroidissement en tant que fluide d'étanchéité en fonction d'un taux de fuite de gaz réactif prévu.

14. Procédé selon la revendication 12, comprenant l'établissement d'une première pression du liquide de refroidissement en tant que fluide d'étanchéité et d'une seconde pression du gaz réactif qui est supérieure à la première pression pour aspirer le gaz réactif qui a fui de la région (29) dans le fluide d'étanchéité.
